Europäisches Patentamt

**European Patent Office**

Office européen des brevets

(11) Veröffentlichungsnummer: **0 265 673**
**A2**

(12) **EUROPÄISCHE PATENTANMELDUNG**

(21) Anmeldenummer: **87114021.6**

(22) Anmeldetag: **25.09.87**

(51) Int. Cl.⁴ **C09J 3/14** , C09J 7/00

Die Bezeichnung der Erfindung wurde geändert (Richtlinien für die Prüfung im EPA, A-III, 7.3).

(30) Priorität: **25.10.86 DE 3636396**

(43) Veröffentlichungstag der Anmeldung:
**04.05.88 Patentblatt 88/18**

(84) Benannte Vertragsstaaten:
**AT BE CH DE ES FR GB IT LI NL SE**

(71) Anmelder: **Beiersdorf Aktiengesellschaft**
**Unnastrasse 48**
**D-2000 Hamburg 20(DE)**

(72) Erfinder: **Kramer, Jürgen, Dr.**
**Klecken OT Hainbuch Stieglitzweg 30**
**D-2107 Rosengarten(DE)**

(54) **Wärmeaktivierbarer Klebstoff, seine Verwendung und Verfahren zu seiner Herstellung.**

(57) Wärmeaktivierbarer, gesättigter, polymerer Klebstoff, insbesondere in Folienform, dadurch gekennzeichnet, daß er mit hoher Energie, insbesondere mit Elektronenstrahlen bestrahlt ist.

EP 0 265 673 A2

## Wärmeaktivierbarer Klebstoff

Die Erfindung betrifft einen wärmeaktivierbaren, gesättigten, polymeren Klebstoff, insbesondere in Folienform, seine Herstellung und seine Verwendung.

Wärmeaktivierbarere, gesättigte, polymere Klebstoffe sind bekannt, auch bereits solche in Folienform, z.B. solche vom Polyurethan-Typ aus der EP-OS 158.086. Für die Erfordernisse der Praxis genügen die bekannten wärmeaktivierbaren Klebstoffe jedoch nicht immer zufriedenstellend, insbesondere hinsichtlich ihrer Wärmestandfestigkeit, Adhäsionsfähigkeit und Kohäsion.

Aufgabe der Erfindung war es, hier Abhilfe zu - schaffen, insbesondere einen wärmeaktivierbaren, gesättigten, polymeren Klebstoff zu schaffen, der diese Nachteile nicht oder zumindest in beachtlich geringem Maße aufweist.

Gelöst wird diese Aufgabe erfindungsgemäß durch einen solchen Klebstoff, der mit hoher Energie, insbesondere mit Elektronenstrahlen bestrahlt ist und wie er näher in den Patentansprüchen umschrieben ist.

Bei der Einwirkung von Elektronenstrahlung auf Polymere entstehen intermediäre aktive Zentren (angeregte Moleküle, Radikale und geladene Teilchen), deren Wechselwirkung zur Ausbildung von räumlichen Netzwerken und zu Abbauerscheinungen der Polymerketten führt. Das Verhältnis der Geschwindigkeiten dieser Reaktionen bestimmt den Wert der Strahlendosis, bei der möglicherweise die Netzwerkbildung die Depolymerisation überwiegt. Die Methode der Elektronenstrahlbehandlung ist in Kunststoff-und Kautschuktechnologie lange bekannt und wird zur Erzielung spezieller Eigenschaften von Kunststoffen und Vulkanisation vielfach eingesetzt. In der Klebetechnik kennt man die Elektronenbestrahlung vor allem zur Herstellung von Haftklebebeschichtungen. Dort beschichtet man einen Träger mit aus monomeren und/oder oligomeren Polymeren formulierten niedrigviskosen Klebemassen. Versuche an Haftschmelzklebemassen ergaben jedoch, daß diese durch die Bestrahlung stark an Haftklebrigkeit verlieren und damit für praktische Anwendungen nicht eingesetzt werden können.

In überraschender Weise zeigte sich nun im Falle von wärmeaktivierbaren gesättigten, polymeren Klebern beim Bestrahlen mit hoher Energie, insbesondere mit Elektronenstrahlung, daß die Eigenschaften dieser Kleber so günstig zu beeinflussen sind, indem einerseits Abbauprozesse nicht überwiegen und andererseits die Kohäsion des Klebers zunimmt und gleichzeitig die Adhäsionsfähigkeit ebenfalls zunimmt, ohne die Aktivierungstemperatur des Klebers wesentlich zu erhöhen. Dies war aus dem Stand der Technik nicht herzuleiten.

In geeigneter Weise werden die verwendeten Klebstoffe mit einer Dosis von etwa 30 - 400 kGy bestrahlt, insbesondere mit 50-300 und ganz besonders bevorzugt mit 150-250 kGy, wobei die beim Bestrahlen entstehende Wärme bevorzugt abgeführt wird, was besonders bei Klebstoff-Folien durch Führen über eine gekühlte Trommel oder dergleichen ohne besonderen Aufwand möglich ist.

Derartige Klebstoff-Folien sind etwa 5 - 1000 My dick, insbesondere 20 - 400 und ganz besonders bevorzugt 20 - 100 My.

Besonders geeignet ist ein Klebstoff vom Polyurethan-Typ, wie er in den Patentansprüchen näher gekennzeichnet ist, vgl. auch EP-OS 158.086, auf die ausdrücklich Bezug genommen wird ohne deren Inhalt hier im Detail wiederzugeben. Weitere geeignete Klebstoffe sind Mischpolymere aus z.B. Ethylen/Vinylacetat/Acrylsäure, aus Ethylen/Acrylsäure, aus Ethylen/Methacrylsäure, aus Ethylen/Alkylacrylat, aus Ethylen/Vinylester oder auch Copolyamide und Copolyester.

Die Verwendung der erfindungsgemäßen Klebstoffe zur Herstellung von Verbundstrukturen kann in an sich bekannter Weise erfolgen, insbesondere durch Kaschieren mittels Vakuumtiefziehen etc., wobei besonders vorteilhaft die verklebte Verbundstruktur noch getempert wird, insbesondere etwa eine Stunde bei 150°C.

Im folgenden wird die Erfindung anhand von Ausführungsbeispielen erläutert, ohne diese damit unnötig einschränken zu wollen.

Beispiel 1

Aus Schmelzklebstoffen gemäß der EP-OS 158.086, Beispiel 4, werden Klebstoff-Folien mit 25.07 (Folie A) und 32.7 Gew.-% (Folie B) theoretischem Hartsegmentanteil und einem Flächengewicht von ca. 100 g/m² hergestellt. Diese Folien werden mit 50, 100, 150, 200, 250 und 300 kGy in einer Elektronenstrahlanlage (mehrstufiger gasisolierter Scanning-Typ Beschleuniger, Fabrikat High Voltage Engineering Corp., Burlington, USA) bestrahlt.

Mit den bestrahlten Folien werden Prüfkörper aus Buchensperrholz und Baumwollgewebe hergestellt und mit einer Last von 1 N/3 cm im aufsteigenden Wärmetest geprüft.

Es zeigt sich, daß die Wärmestandfestigkeit und auch die Kohäsion deutlich erhöht sind gegenüber den unbestrahlten Folien.

Beispiel 2

Granulate eines Copolymerisats aus Ethylen, Acrylsäure und t-Butylacrylester (MFI 190/2.16. = 7, Dichte = 0.927 g/cm³, Smp. = 99°C), wurden zu Folien von ca. 100 My Dicke verpreßt. Die Folien wurden in einer Elektronenbeschleunigungsanlage gemäß Beispiel 1 in Dosisschritten von max. 83 1/3 kGy bei 350 kV mit bis zu 300 kGy Gesamtdosisleistung elektronenstrahlbehandelt. Mit den Folien wurden AlCuMg/Klebstoff-Folie/Baumwollgewebe Prüfkörper für Wärmestandversuche angefertigt. Die Prüfkörper zeigten eine deutliche Verbesserung der Wärmestandfestigkeit gegenüber unbehandelten Klebstoffen und trennten sich im Gegensatz zu den nichtbehandelten unter Adhäsionsversagen.

Beispiel 3

Mit Granulaten von Copolymerisaten aus Ethylen und Acrylsäure mit Acrylsäuregehalten von 20 und 8 %,

Polymer I SZ 62; MFI 20; Smp. 89°C; EWP 60°C

Polymer II = SZ 156; MFI 165; Smp 69°C; Ewp 37°C

Polymer III = SZ 156; MFI 2; Smp. 83°C; Ewp 46°C SZ ASTM D-9404; MFI 125°C, 325 g - ASTM D 1238A, EWP (R + B) ASTM E - 28,

Es wurde im Beispiel 2 verfahren. Die Prüfkörper zeigten eine deutliche Verbesserung der Wärmestandfestigkeit. Die Trennung der Prüfkörper erfolgte überwiegend durch Kohäsionsriß.

Beispiel 4

Mit Granulaten aus elastischen Polyurethanharzen auf Polyesterbasis, die üblicherweise als Komponenten für Lösungsmittelklebstoffe eingesetzt werden, nämlich mit einem linearen Polyester-Polyurethan auf Basis Adipinsäure und Hexandiol, Viskosität (15% in MEK), 1,2 Pa•s, Dichte = 1,21 g/cm³, OH-Zahl <5, wurde wie in Beispiel 2 verfahren. Die Prüfkörper zeigten eine sehr starke Erhöhung der Wärmestandfestigkeit. Bei Prüftemperaturen bis + 120°C trennten sich die Körper unter Adhäsionsriß, darüber unter Kohäsionsriß.

Beispiel 5

Mit einem Granulat eines schwachkristallinen Copolyesters, mit einer Schmelzviskosität von 160°C = 74 Pa•s, 180°C = 50 Pa•s, 200°C = 18 Pa•s, 220°C = 9 Pa•s und Dichte = 1,24 g/cm³ und $T_G$ = 10°C wurde wie in Beispiel 2 verfahren. Die Prüfkörper zeigten eine starke Erhöhung der Wärmestandfestigkeit und trennten sich unter Kohäsionsriß.

**Ansprüche**

1. Wärmeaktivierbarer, gesättigter, polymerer Klebstoff, insbesondere in Folienform, dadurch gekennzeichnet, daß er mit hoher Energie, insbesondere mit Elektronenstrahlen bestrahlt ist.

2. Wärmeaktivierbarer Klebstoff nach Anspruch 1, dadurch gekennzeichnet, daß er mit Elektronenstrahlen mit einer Dosis von 30 - 400, insbesondere 50 - 300, ganz besonders 150 - 250 kGy bestrahlt ist.

3. Wärmeaktivierbarer Klebstoff nach Anspruch 1, dadurch gekennzeichnet, daß die beim Bestrahlen entstehende Wärme abgeführt ist.

4. Wärmeaktivierbarer Klebstoff nach Anspruch 1 in Form von Klebstoff-Folien von 5 - 1000, insbesondere 20 - 400, ganz besonders 20 - 100 My Dicke.

5. Wärmeaktivierbarer Klebstoff nach Anspruch 1, dadurch gekennzeichnet, daß er aus einem Polyurethan besteht, insbesondere aus Polyesterurethanen, die durch Umsetzung von organischen Diisocyanaten mit vorzugsweise difunktionelle Gruppen aufweisenden Polyesterpolyolen und niedermolekularen Diolen als Kettenverlängerungsmittel unter Einhaltung eines NCO/OH Äquivalentverhältnisses von 0,9 : 1 bis 1,05 : 1 erhältlich sind, wobei das molare Verhältnis der eingesetzten Polyesterpolyole zum eingesetzten Kettenverlängerungsmittel 5 : 1 bis 0,66 : 1 beträgt.

6. Wärmeaktivierbarer Klebstoff nach Anspruch 1, dadurch gekennzeichnet, daß er mit Harzen modifiziert ist.

7. Verwendung eines wärmeaktivierbaren Klebstoffs nach einem der Ansprüche 1 - 6 zur Herstellung von Verbundstrukturen, insbesondere von Kaschierteilen für nach einem der Ansprüche 1 - 6 zur Herstellung von Verbundstrukturen, insbesondere von Kaschierteilen für den Kraftfahrzeuginnenausbau durch Vakuumtiefziehen, Tiefziehpressen oder Vakuumtiefziehpressen, ggf. unter nachfolgendem Tempern der erhaltenen Vebundstrukturen.

8. Verfahren zur Herstellung eines wärmeaktivierbaren Klebstoffs nach einem der Ansprüche 1 - 6, dadurch gekennzeichnet, daß man den Klebstoff insbesondere in Folienform einer engergiereichen Strahlung, insbesondere Elektronenstrahlen unterwirft, und den so behandelten Klebstoff für eine spätere Verarbeitung unter Wärmeaktivierung bereitstellt.